# EUROPEAN PATENT APPLICATION

(11) **EP 1 297 870 A2**
(43) Date of publication of application: **02.04.2003**
(21) Application number: 02256722.6
(22) Date of filing: 26.09.2002
(51) Int. Cl.: A63F 13/12

(54) **Robot game system**

(30) Priority: 28.09.2001 JP 2001302738
(71) Applicant: Ishikawajima-Harima Heavy Industries Co., Ltd., Chiyoda-ku, Tokyo (JP)
(72) Inventor: Kitazawa, Yukihito, Ichikawa-shi, Chiba-ken (JP); Hotta, Hideaki, Higashiyamato-shi, Tokyo (JP)
(74) Representative: Mounteney, Simon James

(57) **Abstract**

The present invention has as an object understanding the particular features of the space environment, and as a means of attaining this object, comprises a game site set in a space facility A, game robots x1 and x2 that are accommodated within the game site 1 to serve an operational signal transmitting device 2 that provides an operational signal received from earth B to the game robots x1 and x2, a video device 3 that picks up an image of the game site 1 to serve as a site image, a game signal transmitter 5 that transmits the site image to the earth as a game signal, an operational signal transmitter 8 that is provided on earth B and transmits to the operational signal transmitting device 2 the operational signal input by the operators S1 and S2 of the game robots x1 and x2, a game signal receiver 9 that is provided on earth B and receives the game signal from the game signal transmitter 5, and a broadcast facility 10 that broadcasts the game signal received by the game signal receiver 9.

## Description

### BACKGROUND OF THE INVENTION

### Field of the Invention

The present invention relates to a robot game system that utilizes the characteristic features of outer space.

### Description of the Related Art

As is well known, the construction of the ISS (International Space Station) is in progress, with a completion target date of 2006, and the effective international use of outer space is becoming a fundamental problem to be addressed. The Japanese role with respect to this international space station is to provide a test module called "Kibou", and the production and testing of the protoflight model is currently in progress.

In such circumstances, increasingly fierce competition to develop space related technical fields is anticipated, and in response to this, it is necessary to increase the understanding and educational level related to space and space development at the national level. In particular, in order to develop various types of mechanical apparatuses and electronic apparatuses used under the particular environment found in space, it is necessary to deepen students' understanding of the particular features of the space environment.

### SUMMARY OF THE INVENTION

In consideration of the circumstances described above, it is an object of the present invention to deepen the understanding of the particular feature of the space environment.

In order to attain this object, the present invention employs a structure comprising a game site set in a space facility, game robots accommodated in said game site, an operational signal transmission device that provides an operational signal received from earth to the game robots, a video device that picks up an image of the game site to serve as a site image, a game signal transmitter that transmits to earth the site image to serve as a game signal, an operational signal transmitter provided on earth that transmits an operational signal input from the operators of the game robots to the transmission device, a game signal receiver provided on earth that receives the game signal from the game signal transmitter, and a broadcast facility that broadcasts the game signal received by said game signal receiver.

According to the invention having this type of structure, the operators on earth carry out a game by remotely controlling the game robots accommodated within the space facility, and thus the operators can understand the particular features of a space environment, for example, of a gravity-free environment, which differs from that of earth, while living on earth.

### BRIEF DESCRIPTION OF THE DRAWINGS

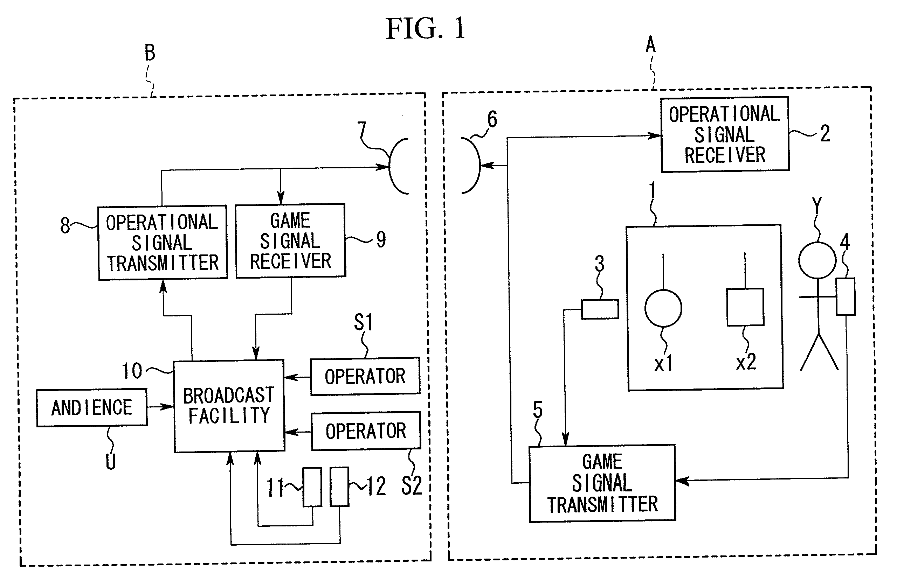

Fig. 1 is a schematic diagram of the system according to a preferred embodiment of the present invention.

### DESCRIPTION OF THE PREFERRED EMBODIMENTS

Below, a preferred embodiment of the robot game system according to the present invention will be explained with reference to the figure.

Fig. 1 is a schematic diagram of the system of the present embodiment. In this diagram, the reference letter A is the International space station (space facility), and B is a base station on earth. In addition, in the International Space Station A, reference numeral 1 is a game site, 2 is an operational signal receiver, 3 is a video camera, 4 is a microphone, 5 is a game signal transmitter, 6 is an antenna, x1 and x2 are game robots, and Y is space station personnel (director). At the base station B, reference numeral 7 is an antenna, 8 is an operational signal transmitter, 9 is a game signal receiver, 10 is a broadcast facility, 11 is a video camera for the operators, 12 is a microphone for the operators, S1 and S2 are the operators, and U is the audience.

The game site 1 is disposed within the pressurized environment of the test module "Kibou", which is one part of the International Space Station A, and the game robots x1 and x2 in the gravity-free environment are set inside a three-dimensional form having a predetermined volume so as to be able to move in three-dimensions. The game robots x1 and x2 are accommodated within this game site 1. Moreover, this game site 1 can also be set in an exposed environment outside the International Space Station A.

The operational signal receiver 2 receives an operational signal for remotely controlling the game robots x1 and x2 via the antenna 6, and this operational signal is transmitted via a radio to each of the game robots x1 and x2. Video camera 3 picks up the image of the game site 1, which serves as a site image. Specifically, based on the above operational signal, the operating (gaming) of each of the game robots x1 and x2 is output to the game information receiver 9 by recording the image of each of the game robots x1 and x2, which serves as a game image. The microphone 4 picks up the voice of the space station personnel Y as the director's voice, and outputs this to the game information receiver 9. The space station personnel Y lives in the International Space Station A, and is a director in charge of the progress of the game using the game robots x1 and x2.

The game robots x1 and x2 are battle-type robots that carry out a battle game by moving within the game site 1 in all directions based on the operational signal, pet-type robots where players compete to exhibit actions or feelings based on operational signals, or racing-type robots that compete with each other in a movement space. The game signal transmitter 5 uses the site image and the director's voice described above as a game signal, and then transmits this to the base station B via the antenna 6. The antenna 6 broadcasts the game signal input from the above game signal transmitter 5 as an electromagnetic wave towards the base station B. At the same time, the operational signal broadcast from the base station B as an electromagnetic signal is captured and input into the operational signal receiver 2.

The antenna 7 captures the game signal broadcast from the above antenna 6, and at the same time broadcasts the operational signal towards the antenna 6. The operation information transmitter 8 transmits the operational signal input from the broadcast facility 10 to the International Space Station A via the above antenna 7. The game information receiver 9 receives the game signal via the antenna 7, and outputs it to the broadcast facility 10. Moreover, the antenna 7, the operation information transmitter 8, and the game information receiver 9 are facilities in terrestrial bases that specialize in carrying out communication with the International Space Station A.

The operator video camera 11 picks up the image of the operators S1 and S2 that remotely control each of the game robots x1 and x2, which serve as operator's images, and outputs these to the broadcast facility 10. The operator microphone 12 picks up the voices of the above operators S1 and S2, which serve as operator's voices, and outputs this to the broadcast facility 10. The operators S1 and S2 output to the broadcast facility 10 the operational signals by operating the operation terminal for each operator. The broadcast facility 10 is a general television broadcast (ground wave broadcast or satellite broadcast) or a pre-existing broadcast facility that carries out Internet broadcasts via the Internet. The audience U is connected to the broadcast facility 10 via the Internet, and transmits the judging information about the game and the like to the broadcast facility 10.

Next, the operation of the present embodiment structured in this manner will be explained.

In the present embodiment, as can be understood from the structure of the system described above, while viewing the game image, the terrestrial operators S1 and S2 carry out a game by remotely controlling the game robots x1 and x2 that are accommodated in the game site 1. In addition, the game state 1, that is, the game images of the game robots x1 and x2 and the directing voices of the space station personnel Y, is transmitted to the base station B from the International Space Station A to serve as a game signal, and broadcast to the general audience U.

In the case that the game robots x1 and x2 are battle-type robots, each of the game robots x1 and x2 carry out a battle game by moving in all directions within the game site 1 based on operational signals. The space station personnel Y announce the state of progress of the battle game, and at the same time, judge the winner and looser based on predetermined rules that have been set in advance. In addition, the operators' images and operators' voices of the operators S1 and S2 that operate the game robots x1 and x2 are broadcast to the audience U as a part of the state of the game.

In contrast, in the case that the game robots x1 and x2 are pet-type robots, each of the operators S1 and S2 make the game robots x1 and x2 exhibit various expressions or strike various poses by remote control. In addition, the game images of these poses and expressions are broadcast to the audience U, along with the director's voices of the space station personnel Y. The audience U transmits in real time the result of the judgment, for example, of which of the pet-type robots is superior, via the Internet to the broadcast facility 10, and the superiority of the game robots x1 and x2 is determined by tallying the results of these judgments.

According to this type of present embodiment, by remotely controlling the game robots x1 and x2, which are in a gravity free environment, the earth-based operators S1 and S2 learn how the game robots x1 and x2 should be designed in order to move them as intended in such an environment, and can master the basics of remote control or the like.

In addition, due to the earth and the International Space Station A being distant from each other, a time delay occurs from when the operators S1 and S2 sending the operational signal until the game robots x1 and x2 actually move. Thus, the operators S1 and S2 can learn the design and operational methods for game robots x1 and x2 taking into consideration such control delays.

This means that, according to the present embodiment, each of the operators S1 and S2 can deepen their understanding of the particular features of a space environment while living on earth.

Moreover, the present invention is not limited by the embodiment described above, and for example, the following examples can be considered.
a. In the case, for example, that the game robots x1 and x2 are pet-type robots, the space station personnel Y can control each of the robots x1 and x2 by radio. In this case, a dedicated server can be provided on the Internet, requests from the audience U for dancing, poses, and the like can be received, and based on these requests, the space station personnel Y can operate each of the game robots x1 and x2 by radio. In this case, the results of the judgments of the audience U are received by the dedicated server, and the audience U is notified about the final game results via a particular home page on the dedicated server. Furthermore, in this case, the video cameras 3 that pick up the site image are provided in a plurality of locations in the game site 1, and based on requests from the audience U, the site images can be switched.
b. The number of game robots x1 and x2 are not limited, and 3 or more can be used.
c. The game robots x1 and x2 can be structured so as to operate autonomously based on a program incorporated therein in advance.
d. Furthermore, in the case of racing-type robots or pet-type robots, they may race or provide gaming or performances individually.

## Claims

1. A robot game system comprising:
a game site set in a space facility;
game robots accommodated in said game site;
an operational signal transmission device that provides an operational signal received from earth to the game robots;
a video device that picks up an image of the game site to serve as a site image;
a game signal transmitter that transmits to earth the site image to serve as a game signal;
an operational signal transmitter provided on earth that transmits an operational signal input from the operators of the game robots to the transmission device;
a game signal receiver provided on earth that receives the game signal from the game signal transmitter; and
a broadcast facility that broadcasts the game signal received by said game signal receiver.

2. A robot game system according to claim 1 that further provides a microphone that picks up a voice of a director who is in charge of the progress of a predetermined game in connection with the game robots as the director's voice, and the game signal transmitter transmits the director's voice to earth as a part of the game signal.

3. A robot game system according to claim 1 or claim 2 wherein the game site is set to a three-dimensional form so that the game robots can move in a three dimensional space in a gravity-free environment within the space facility.

4. A robot game system according to any of claims 1 through 3 further providing an operator video device that picks up an image of an operator of the game robot, which serves as the operator's image, and an operator microphone that picks up a voice of the operator, which serves as the operator's voice, and the broadcast facility broadcasts the operator image and operator voice, which serves as a part of the game signal in addition to the site image and the director voice.

5. A robot game system according to any of claims 1 through 4 wherein the game robots are battle-type robots that carry out a battle based on the operational signal of the operator.

6. A robot game system according to any of claims 1 through 4 wherein the game robots are pet-type robots that compete to exhibit actions and emotions based on the operational signal.

7. A robot game system according to claim 6 wherein judgment information of an audience located on earth is input to the broadcast facility via Internet, and a winner and loser of a game are determined based on this judgment information.

8. A robot game system according to any of claims 1 through 4 wherein the game robots are robots that compete in movement and in time.

9. A robot game system according to any of claims 1 through 8 wherein the broadcast facility broadcasts the game signal via the Internet.
